# EUROPÄISCHE PATENTSCHRIFT

(11) **EP 2 091 632 B1**
(45) Veröffentlichungstag und Bekanntmachung des Hinweises auf die Patenterteilung: **08.02.2012**
(21) Anmeldenummer: 07818903.2
(22) Anmeldetag: 11.10.2007
(51) Int. Cl.: B01D 46/24, B01D 46/00

(54) **FILTERSYSTEM MIT ABREINIGUNGSVORRICHTUNG**
FILTER SYSTEM HAVING CLEANING DEVICE
SYSTÈME DE FILTRE DOTÉ D'UN DISPOSITIF D'ÉPURATION

(30) Priorität: 17.10.2006 DE 102006048883
(43) Veröffentlichungstag der Anmeldung: 26.08.2009
(73) Patentinhaber: Karlsruher Institut für Technologie, 76131 Karlsruhe (DE)
(72) Erfinder: LEIBOLD, Hans, 76316 Malsch (DE); MAI, Robert, 76185 Karlsruhe (DE)
(74) Vertreter: Weddigen, Andreas
(86) Internationale Anmeldenummer: PCT/EP2007/008832
(87) Internationale Veröffentlichungsnummer: WO 2008/046548

(56) Entgegenhaltungen:
- EP-A- 0 515 878
- EP-A- 0 573 209
- JP-A- 2003 251 125
- JP-A- 2005 342 622
- US-A- 5 433 771

## Beschreibung

Die Erfindung betrifft ein Filtersystem mit Abreinigungsvorrichtung gemäß des ersten Patentanspruchs. Das Filtersystem dient der Partikelfiltration aus Fluiden, insbesondere aus Gasen und insbesondere bei erhöhten Temperaturen.

Zur Partikelfiltration bei hohen Temperaturen werden, abgesehen von metallischen Sonderwerkstoffen, durchweg keramische Filterelemente eingesetzt. Dabei kombinieren vor allem poröse kornkeramische Filterelemente ein gutes Abscheideverhalten mit einer hohen mechanischen Festigkeit bei einer hervorragenden Temperatur- und Korrosionsbeständigkeit. Ein wesentlicher Nachteil dieser porösen Keramiken ist jedoch ihre Bruchempfindlichkeit, die bei der Systemauslegung und beim Betrieb in geeigneter Weise zu berücksichtigen sind.

Partikelfraktionen scheiden sich üblicherweise auf einem Filterelement ab, was mit zunehmender Filtrationszeit zu einem allmählichen Zusetzen der Filterelemente mit einem sog. Filterkuchen, d.h. einer Schicht verdichteter, oftmals auch aneinander klebender Partikelfraktionen führt.

Bei der Filtration von Staub beladene Gasen, d.h. von frei fließenden und/oder extrem feinen Stäuben oder Partikeln werden häufig die bereits auf den Filterelementen rohgasseitig abgeschiedene Partikel durch die Abreinigung durch von Zeit zu Zeit wiederkehrende Gegenströmung oder Gegenstromimpulsen abgelöst und teilweise wieder im Gas resuspendiert, d.h. erneut im Rohgasraum des Filtersystems fein verteilt. Die resuspendierten Partikelfraktionen werden dann teilweise, sofern sie nicht auf andere Weise abgesondert werden, erneut wieder im abgereinigten Filtersystem abgeschieden. Dies macht wiederum eine erhöhte Abreinigungsfrequenz erforderlich und reduziert damit auch die integrale Filtrationskapazität eines jeden Filterelements signifikant.

Zur Abhilfe hierfür bietet sich eine Bereitstellung größerer und damit kostenintensiveren Filterflächen an. Technologisch wird dies beispielsweise durch eine Parallelschaltung einer Vielzahl von Filterkerzen realisiert.

Keramische Filterkerzen werden grundsätzlich in Lochplatten hängend oder auf so genannten Reinluftsammlern (System LLB) stehend angeordnet.

In der DE 39 38 264 A1 wird beispielhaft eine entsprechende Vorrichtung zum Filtern von heißen, staubbeladenen Gasen offenbart, umfassend eine Vielzahl von vertikal angeordneten zylindrischen Einzelfilterkerzen mit jeweils außen liegendem Rohgasbereich. Die Partikel lagern sich demnach außen an den vertikal ausgerichteten Filterkerzenflächen an. Die von diesen abgereinigte Partikelbeladung fällt z.B. bei einer Filterabreinigung nach unten ab und findet sich in einem Trichter als Sammelbehälter für den abgeschiedenen Staub wieder.

Auch die JP 61-268332 A**,** JP 2000-102713 A oder JP 05-253422 A. offenbaren Vorrichtungen mit vertikal angeordneten abreinigbaren zylindrischen Filterelementflächen, unter denen auch die Trichter der vorgenannten Art als Sammelbehälter für die Filterbeladung angeordnet sind.

Bei vertikal hängender Anordnung werden die Filterelemente infolge ihres Eigengewichtes grundsätzlich auf Zug belastet. Bei größeren Baulängen treten zusätzlich hohe Momente auf, sodass die Filterkerzen an den geschlossenen unteren Enden zusätzlich befestigt werden müssen. Der Bruch eines Filterelements führt spontan zum Totalverlust der Filterwirkung und ist, sofern kein Sicherheitsfilter nachgeschaltet ist, verbunden mit erhöhten Partikelemissionen und der Verstopfungsgefahr der Filterelemente von der Reingasseite her.

Bei vertikal stehender Kerzenanordnung z.B. im Rahmen des vorerwähnten LLB-System werden die Filterkerzen auf Reingassammlern in meist aufwendigen Konstruktionen aus hochtemperaturbeständigen metallischen Werkstoffen innerhalb des Rohgasraumes gehalten und geführt. Hohe Staubbelastungen führen zu bleibenden Staubablagerungen auf den vorgenannten Sammlern, die dadurch mit der Zeit zugesetzt werden. Ein ungelöstes Problem ist das kurzzeitige Abheben der Filterkerzen während des Abreinigungsvorganges. Neben der stoßartigen Belastung der Filterkerzen, die zum Kerzenbruch führen kann, gelangt Staub auf die Reingasseite, d.h. auf die Innenseite der Filterkerzen, und führt im Langzeitbetrieb zum allmählichen Verstopfen der Filterelemente.

Die typische Bauweise von Filtersystemen mit den vorgenannten vertikal angeordneten keramischen Filterkerzen begrenzt zudem die in einem verfügbaren Bauvolumen unterzubringende Filterfläche. Die wesentlichen Begrenzungen ergeben sich aus der maximal zulässigen Anströmgeschwindigkeit im Rohgasraum, der maximal möglichen Anzahl von Filterelementen pro Ebene, die in einem Abreinigungsvorgang regeneriert werden können sowie der maximal möglichen Filterfläche pro Element. Die Länge des Filterelements wird durch die mechanische Belastung bei den im Filterbetrieb vorgesehenen hohen Temperaturen begrenzt, wobei die Wahrscheinlichkeit einer Durchbiegung des Filterelements infolge des Eigengewichts, der Biegung, der Schwingungen etc. durch die vorgenannte vertikale Ausrichtung signifikant reduziert wird.

Dagegen wird in der EP 0 682 971 A1 ein Filtersystem mit von außen angeströmten einseitig offenen Filterkerzen offenbart, wobei die Filterkerzen mit ihrer offenen Seite schräg nach unten ausgerichtet in Öffnungen einer Kartusche eingehängt sind. Da die Filterelemente mit einem Ende frei und schräg, d.h. nicht vertikal nach unten im Rohgasraum hineinragen, ist bei erhöhten Einsatztemperaturen mit plastischer Verformung aufgrund von Fließ- und Kriechvorgängen und ab einer bestimmten Einsatzzeit mit Filterkerzenversagen zu rechnen.

Auch sind Filtersysteme mit horizontalen Filteranordnungen bekannt. Darunter werden nachfolgend alle Systeme zusammengefasst, bei denen das Filtermedium horizontal angeordnet ist, so dass während der Filtration mit horizontalen Partikel- oder Staubschichten auf dem Filtermedium zu rechnen ist. Das bedeutet, dass diese Schichten entgegen der Schwerkraft von der Filterfläche abgelöst werden müssen, was einen zusätzlichen Aufwand hinsichtlich Abreinigung bedeutet. Üblicherweise kommt die klassische Jetpulse (Druckimpuls) Abreinigung zum Einsatz. Hier reduzieren sich die Abreinigungskräfte bei dicken Staubschichten mit geringer Permeabilität signifikant aufgrund der systembedingten niedrigen Durchströmungsgeschwindigkeiten. Besonders gravierend ist dies bei Filtermedien mit niedriger Permeabilität wie Sintermetallen, starren Kunststoffelementen und starren Keramiken. Lediglich bei flexiblen und/oder hoch permeablen Fasermedien ist der Rückgang der Abreinigungskräfte nicht so gravierend. Allerdings können dicke Staubablagerungen auch von diesen Medien mit der Jetpulse Abreinigung nicht mehr zuverlässig abgereinigt werden.

Ein Beispiel für horizontal angeordnete Filterelemente mit Jetpulse-Reinigung ist in der JP2005342622 offenbart.

Werden die Filtersysteme mit konventioneller Jet-Pulse Abreinigung betrieben, können backende Stäube einen stabilen Filterbetrieb verhindern, da anhaftende Staubschichten nicht mehr vollständig abgereinigt werden können, wobei die Abreinigungsintensität durch den erhöhten Filterwiderstand zusätzlich herabgesetzt wird.

Davon ausgehend liegt die Aufgabe der Erfindung darin, ein verbessertes Filtersystem mit horizontal ausgerichteten Filterelementen und Abreinigungsvorrichtung vorzuschlagen, welches mit einem kompakten Aufbau sich durch eine große Rohgasbeladungskapazität und gute Abreinigbarkeit auch von Teilen des Filtersystems separat, aber auch durch eine grundsätzlich Eignung als Hochtemperaturfiltersystem auszeichnet.

Die Aufgabe wird durch ein Filtersystem mit Abreinigungsvorrichtung mit den Merkmalen des ersten Patentanspruchs gelöst.

Unteransprüche geben vorteilhafte Ausgestaltungen der Vorrichtung wieder.

Die Aufgabe wird durch ein Filtersystem mit Abreinigungsvorrichtung gelöst, das mindestens zwei horizontal ausgerichtete und an beiden Enden aufliegende und einzeln abgedichtete röhrenförmige Filterelemente aufweist. Die röhrenförmigen Filterelemente überspannen ein Volumen mit einer rohgasseitigen Zuführung und einer nach unten oder horizontal ausgerichteten Rohgasführung zu den Filterelementen.

Die Filterelemente sind vorzugsweise als durchgängig poröse Sinterkörper aus Metall oder Glasfritten, bei Hochtemperaturanwendungen als Keramikkörper ausgeführt und grundsätzlich horizontal über- und nebeneinander in einem rechteckigen, polygonförmigen oder zylindrischen Filterbehälter (rohgasseitigen Filtersystemvolumen) angeordnet. Die Rohgasströmung wird im Bereich der Filterelemente vorzugsweise von oben nach unten geführt und die Filterelemente von außen nach innen angeströmt. Dadurch ist sichergestellt, dass abgereinigter Staub grundsätzlich mit der Rohgasströmung in Richtung Staubsammelraum am unteren Ende des Filtersystemvolumens transportiert und dort die Sedimentation des abgelösten Staubes unterstützt wird. Sind die Filterelemente aus einem spröden Werkstoff wie Keramik gefertigt, werden sie für einen Einsatz in horizontaler Anordnung bevorzugt entweder vorgespannt und/oder vor allem bei großen Baulängen nach oben gewölbt eingebaut. Zugspannungen werden dadurch reduziert oder vermieden.

Die Filterelemente sind dabei einer nach unten gerichteten oder einer horizontalen Rohgasanströmung ausgesetzt, wobei das Filterelement ein reingasseitiges Innenvolumen umschließt, das an einem oder beiden Enden offen ist. Diese offenen Enden dienen als Ausmündung des Innern der Filterelemente zu einem reingasseitigen Ablauf. Jedes der offenen Enden ist jeweils mit einer eigenen Filterkappe abgedeckt, die als Polizeifilter bei einer Zerstörung oder Versagen eines Filterelements eine Einströmung des ungefilterten Rohgases in den reingasseitigen Ablauf verhindert. Zur Vermeidung von unerwünschten Ablagerungen im Innenvolumen und/oder auf den Filterflächen der Filterkappen weisen diese eine offenporigere Struktur als die Filterelemente auf, d.h. die mittlere oder maximale Porengröße (Maschenweite) für die Passagen der offenporigen Filterflächen ist bei den Filterkappen größer als bei den Filterelementen.

Zur Abreinigung wird das CPP-Abreinigungsverfahren angewendet. Die Abreinigung der Filterelemente erfolgt dabei durch Druckaufbau durch die Filterflächen entgegen der Betriebsdurchströmungsrichtung mittels einer Gegendruck-Abreinigungsvorrichtung. Der Druckaufbau selbst wird durch ein Fluidventil der Abreinigungsvorrichtung gesteuert und mittels Druckgaszuführung zwischen Filterelement und Ablauf eingeleitet, wobei die Filterelemente einzeln, gruppenweise und in ihrer Gesamtheit beaufschlagt werden können. Vorzugsweise erfolgt eine Durchleitung des Abreinigungsvorgangs durch die Filterkappen in das Innere der Filterelemente und von dort in das rohgasseitige Filtersystemvolumen. Alternativ können die Druckgaszuführungen auch direkt in das Innere der Filterelemente führen, vorzugsweise an den Enden der Filterelemente, die nicht in den reingasseitigen Ablauf ausmünden. Die Bestandteile der Abreinigungseinrichtung bilden dabei einen integralen Bestandteil des gesamten Filtersystems.

Im Abreinigungsbetrieb erfolgt die Zuführung von Rohgas zu den Filterelementen vorzugsweise von oben nach unten, d.h. stets nach unten gerichtet (oder allenfalls horizontal). Der Staub wird bei dieser Vorgehensweise durch die Überlagerung von Abreinigung und Rohgasströmung schrittweise von den obersten Filtermodulen bzw. Reinigungsabschnitten nach unten transportiert. Durch die direkte Aufprägung des Abreinigungsdruckes auf die abzureinigenden Filterelemente ist gewährleistet, dass auch Staubablagerungen auf der Oberseite der Filterelemente zuverlässig abgelöst werden und damit Staubbrückenbildung verhindert wird.

Für angelagerte Staubschichten muss auf der Oberseite der Filterelemente zusätzlich die Schwerkraft der Staubschichten überwunden werden. Bei einer Jetpulse Abreinigung des CPP-Verfahrens ist der erzielbare Überdruck zusammen mit dem Gesamtwiderstand aus Filterschicht und Staubschicht bestimmend dafür, welche Durchströmung maximal möglich ist.

Die Filterelemente sind für eine vorteilhafte platzsparende und damit ökonomische Raumaufteilung im rohgasseitigen Filtersystemvolumen parallel zueinander angeordnet. Eine versetzt parallele Anordnung ermöglicht zudem die Unterbringung einer möglichst großen Anzahl von Filterelementen in engem Raum (ähnlich einer dichtesten Kugelpackung). Damit werden die Filterflächen der Filterelemente auch weitgehend unter identischen Bedingungen vom Rohgas angeströmt und durchdrungen. Da die Filterflächen auch annähernd quasihomogen im Filtersystemvolumen verteilt sind, ist auch mit einer bevorzugten gleichmäßigen Beladung der Filterflächen zu rechnen.

Alternativ kann auch eine fächer- oder sternförmige Anordnung der Filterelemente im Filtersystemvolumen bevorzugt werden. Der Vorteil dieser Ausführungsform liegt darin, dass die Filterelemente mit einem Ende zusammenlaufen und damit in einem geringeren reingasseitigen Volumen, entweder einem Ablaufkanal oder einer Druckgaszuführung für die Abreinigungsvorrichtung zusammenlaufen.

Die Erfindung wird mit Ausführungsbeispielen anhand von Figuren näher erläutert. Es zeigen
**Fig.1a** **bis** c eine erste Ausführungsform mit geraden horizontal und parallel zueinander angeordneten Filterelementen mit einem einseitigen Auslass,
**Fig.2a** **bis** c eine zweite Ausführungsform mit geraden horizontal und parallel zueinander angeordneten Filterelementen mit beidseitigen Auslass,
**Fig.3a** und b weitere Ausführungsformen mit nach oben gekrümmten (a) oder nach oben geknickten (b) horizontal und parallel zueinander angeordneten Filterelementen mit einseitigen Auslässen,
**Fig.4** einen Querschnitt einer Ausführungsform mit geteilten rohgasseitigen Filtersystemvolumen mit jeweils einer Anzahl von einseitig geschlossenen Filterelementen sowie
**Fig.5a** **bis f** beispielhafte Anordnungen und Querschnitte der Filterelemente in den vorgenannten Ausführungsformen.

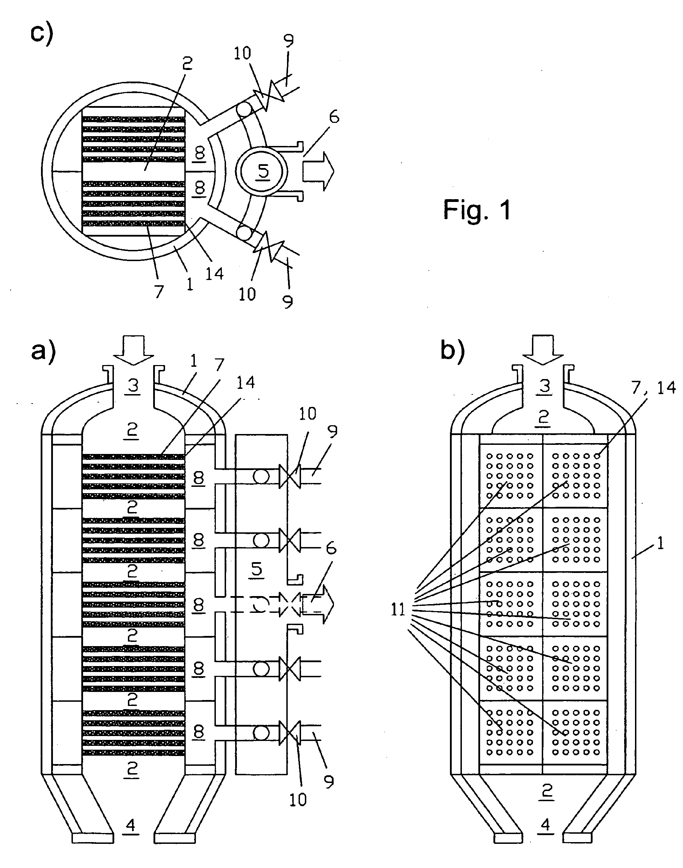

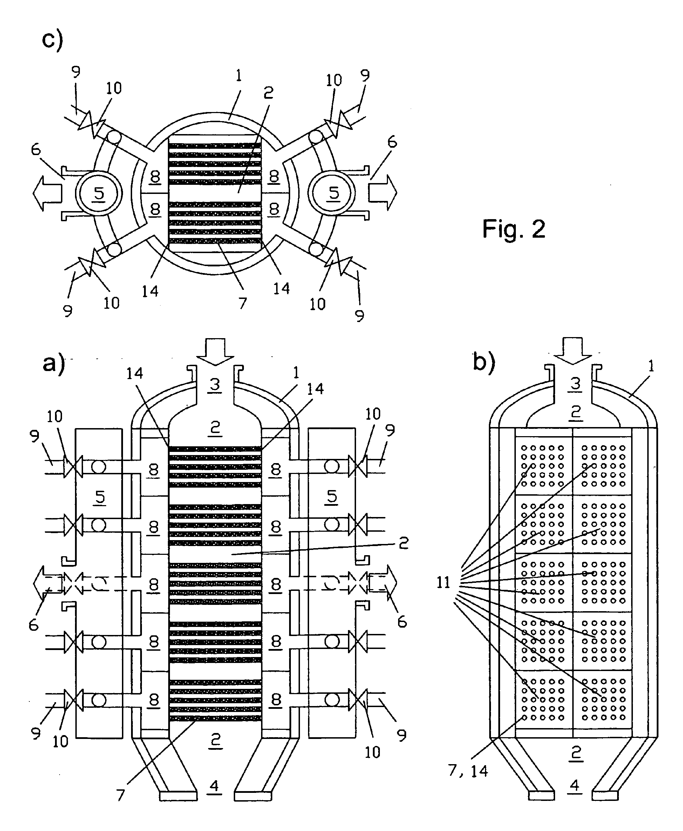

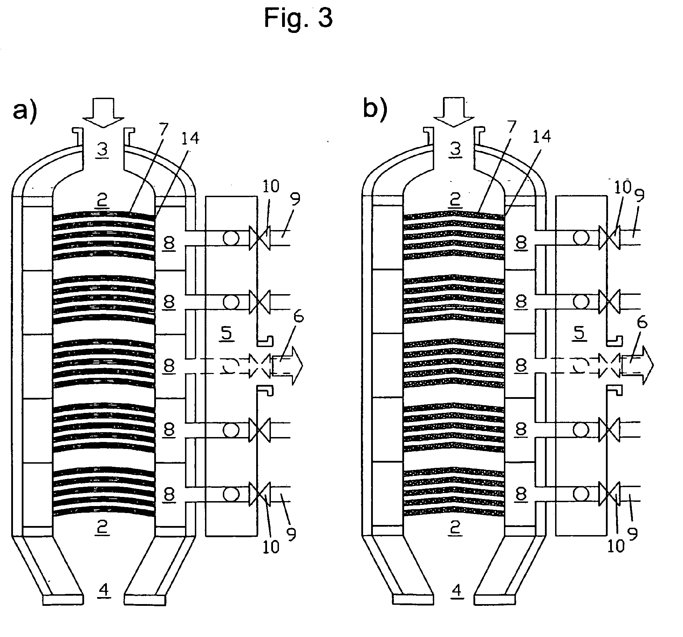

Das Filtersystem besteht - wie beispielhaft in **Fig.1a** **bis** c, **2a bis c sowie 3a** und b dargestellt - im Wesentlichen aus einem Filtersystemgehäuse **1** mit einem rohgasseitigen Filtersystemvolumen **2** mit einer oben angeordneten Zuführung **3** für ein abzureinigendes Rohgas und unten angeordneten Staubsammelraum **4** sowie reingasseitigen Ablaufkanälen **5** mit Ablauf **6.** Im Filtersystemvolumen sind mindestens zwei horizontal ausgerichtete und dieses überbrückend an beiden Enden aufliegende röhrenförmige Filterelemente **7** eingesetzt, die an einem **(****Fig.1a** **bis c sowie 3a und b)** oder beiden Enden **(****Fig.2a** **bis c)** offen gestaltet über reingasseitige Sammelkanalsysteme **8** in die Ablaufkanal **5** ausmünden. Ferner weisen die dargestellten Filtersysteme Abreinigungsvorrichtungen **9** (in den **Figuren** nur angedeutet, umfassend z.B. ein Druckreservoir mit Zuschaltventilen) mit Fluidventilen **10** auf, die über die Sammelkanalsysteme **8** in diese direkt und vorzugsweise ohne Krümmung vor die offenen Enden der Filterelemente einmüden. Die Filterelemente sind in Filterelementgruppen **11** mit vorzugsweise jeweils einem eigenen Sammelkanalsystem **8,** Abreinigungsvorrichtung **9** und Fluidventil **10** zusammengefasst (vgl. insbesondere **Fig.1b** **und** **2b****).** Dadurch lassen sich in einem Filtersystem die Filterelemente gruppenweise vorzugsweise von oben nach unten ohne Unterbrechung des laufenden Filterbetriebs abreinigen. Vorzugsweise sind die einzelnen Abreinigungsvorrichtungen zu einem Abreinigungssystem mit mehreren ggf. umschaltbaren Ausgängen für mehrere Filterelementgruppen zusammengefasst.

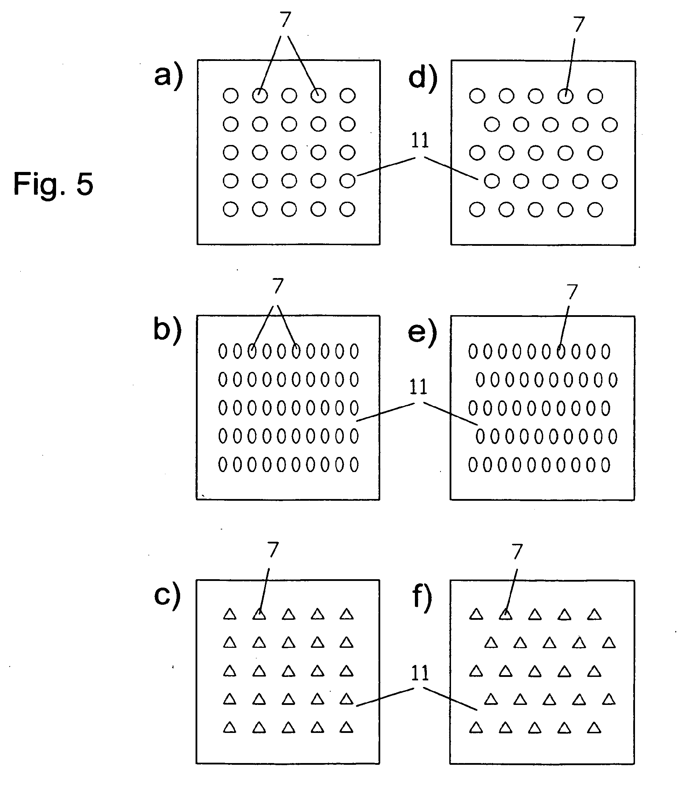

Die Anordnung der Filterelemente 7 ist vorzugsweise gerade oder versetzt zueinander. **Fig.5a** **bis c** gibt z.B. eine gerade matrix-ähnliche Anordnung, **Fig.5d** **bis f** eine möglich dichte und damit das Filtersystemvolumen besonders gut ausnutzende versetzte Anordnung der Filterelemente in einer Filterelementgruppe 11 wieder. Dabei ist grundsätzlich eine beliebige Kombination mit runden **(****Fig.5a** **und d),** ovalen **(****Fig.5b** **und e),** dreieckigen **(****Fig.5c** **und f)** oder anderen Filterelementquerschnitten wie z.B. tropfenförmigen möglich.

Die dargestellten Filterelemente weisen als röhrenförmige Elemente mit porösen Filterflächen einen kreisförmigen Querschnitt auf. Sie sind horizontal und parallel zueinander ausgerichtet, wobei die in **Fig.3a** **und b** offenbarten Ausführungsformen eine entgegen der Schwerkraft nach oben gerichtete Krümmung bzw. Knickung aufweisen. Die letztgenannte Gestaltung dient insbesondere einer Erhöhung der Standfestigkeit gegenüber plastischer Verformung (Durchbiegung z.B. aufgrund des angreifenden Eigengewichts der Filterelemente), initiiert durch länger andauernden Fließ- oder Kriechvorgängen besonders bei hohen Einsatztemperaturen.

Die offenen Enden der in **Fig.1a** **bis c, 2a bis c sowie 3a und b** dargestellten Filterelemente **7** sind mit nicht detailliert wiedergegebenen Filterkappen **14** abgedeckt. Die Filterkappen sind als plane Scheiben auf die offenen Enden und diese vollständig überdeckend aufgeklebt, gelötet oder geschweißt. Zur Vermeidung von thermisch bedingten Ermüdungseffekten sind Filterelemente und Filterkappen aus gleichen Materialien oder Materialien mit gleichen oder ähnlichen thermischen Ausdehnungsverhalten gefertigt.

Die Filterelemente mit den Filterkappen werden bei den genannten Ausführungsformen im Filtersystemvolumen zwischen zwei gegenüberliegende Wandungen eingesetzt. Die geschlossenen Enden der Filterelemente oder die offenen Enden ohne eine Funktion als Gasaustritt (Blindöffnung mit oder ohne Filterkappe, bietet sich an, wenn in einer Serie nur ein Filterelementtyp gefertigt werden soll) werden hierzu in Vertiefungen gehalten, wobei in diese im Falle einer Blindöffnung eine Dichtung eingesetzt ist. Die als Gasaustritt dienenden Enden mit oder ohne Filterkappe werden dagegen in Durchgangsöffnungen zum Sammelkanalsystem eingesetzt und sind entsprechend zur Wandung abzudichten. Die Dichtungen sind entsprechend der Einsatzbedingungen (Temperatur, Druck) auszuwählen und zu dimensionieren. Runde Filterelementquerschnitte sind im Falle einer aufwendigeren Abdichtung bei höheren Temperaturen zu bevorzugen.

Alternativ können in den vorgenannten Ausführungsformen die Filterelemente und Filterkappen einstückig durch einen nach allen hin gasdurchlässigen Hohlkörper gebildet sein.

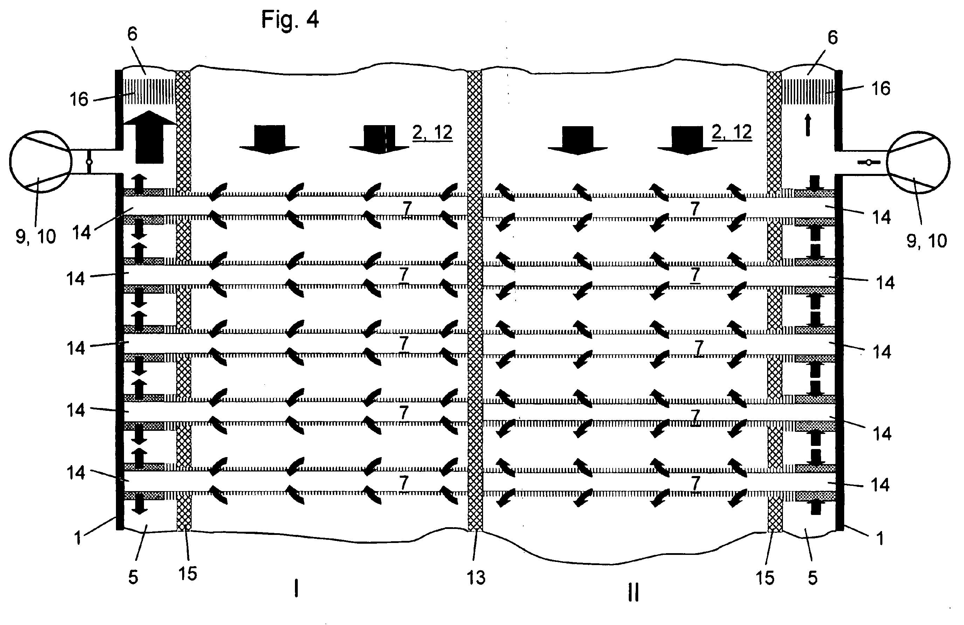

Einen Ausschnitt einer weiteren Ausführungsform gibt **Fig.4** wieder. Sie umfasst ein Filtersystem mit einer mittigen Vertikalteilung des Filtersystemvolumens 2 inklusive der Filterelemente 7 in zwei Teilvolumina **12.** Das System entspricht in prinzipiell zwei parallel geschalteten Einzelsystemen **I und II** gemäß **Fig.1a** **bis c** mit zur Trennwand 13 hin geschlossenen einseitig offenen Filterelementen. Als Filterkappen **14** dienen jeweils die durch Öffnungen in der Filtersystemvolumenwandung 15 direkt in den Ablaufkanal **5** reichenden Endstücke der Filterelemente. Ein Sammelkanalsystem zum Ablaufkanal wie in den vorangegangenen Ausführungsformen nicht erforderlich. Vorzugsweise sind die Filterelemente inklusive der Filterkappen als einstückig beidseitig offene gleichmäßig poröse Rohre, d.h. als einfache herzustellende preisgünstige Komponenten (ggf. abzulängende Meterware) gefertigt, die mit ihren Enden zwischen Trennwand 13 und Filtersystemgehäuse eingespannt sind und durch diese ggf. mit zusätzlichen Dichtungseinsätzen auch abgedichtet werden.

Zwei parallel geschaltete Einzelsysteme **I** und **II** lassen auch einen wechselseitigen Betrieb im Betriebszustand (vgl. **I)** und Abreinigungsmodus (vgl. **II)** zu, wobei der Ablauf **6** durch einen fluidisches Ventil **16** gegen ein nutzloses Verpfuffen der Druckstöße der Abreinigungsvorrichtung **10** ausgestattet ist. Ein fluidisches Ventil umfasst dabei engporiges Kanalsystem, das so geformt ist, dass einen bestimmten Volumenstrom mit einem wesentlich geringeren Druckverlust passieren lässt und der bei einem größeren Volumenstrom oder anliegenden Überdruck allein durch eine Änderung der Strömungsverhältnisse ansteigt (z.B. Umschlagen von laminarer zu turbulenter Strömung und damit einer Strömungsblockade im Kanalsystem).

### Bezugszeichenliste

- 1: Filtersystemgehäuse
- 2: Filtersystemvolumen
- 3: Zuführung
- 4: Staubsammelraum
- 5: Ablaufkanal
- 6: Ablauf
- 7: Filterelement
- 8: Sammelkanalsystem
- 9: Abreinigungsvorrichtung
- 10: Fluidventil
- 11: Filterelementgruppe
- 12: Teilvolumen
- 13: Trennwand
- 14: Filterkappe
- 15: Filtersystemvolumenwandung
- 16: fluidisches Ventil

## Patentansprüche

1. Filtersystem mit Abreinigungsvorrichtung **(9, 10),** umfassend
a) mindestens zwei horizontal ausgerichtete und an beiden Enden aufliegende und einzeln abgedichtete röhrenförmige Filterelemente **(7)** mit ein oder zwei Enden mit Filterkappen **(14),** wobei diese durch die Filterkappen **(14)** abgedeckt sind und wobei die Filterelemente eine gleiche oder kleinere Maschenweite oder Porengröße als die Filterkappen aufweisen,
b) einen außerhalb der Filterelemente angeordneten rohgasseitigen Zuführung **(3)** in ein Filtersystemvolumen **(2)** mit einer nach unten oder horizontal ausgerichteten Rohgasführung,
c) einen mit dem Innern der Filterelemente verbundenen reingasseitigen Ablauf **(6),** wobei für einen Filterbetrieb eine serielle Strömungsverbindung von der rohgasseitigen Zuführung **(3)** über die röhrenförmige Filterelemente **(7)** in das Innere der Filterelemente und von dort über die Filterkappen **(14)** zum Ablauf **(6)** besteht,
d) mindestens eine Gegendruck-Abreinigungsvorrichtung **(9, 10)** mit Fluidventil **(16)** im Ablauf **(6),** wobei für einen Abreinigungsbetrieb bei geschlossenen Fluidventil eine serielle Strömungsverbindung von der Gegendruck-Abreinigungsvorrichtung **(9, 10),** über die die Filterkappen **(14)** in das Innere der Filterelemente und von dort über die Filterelemente **(7)** zum Filtersystemvolumen **(2)** besteht sowie
e) einer Druckgaszuführung in den Gasraum zwischen Filterelement und Ablauf,
**dadurch gekennzeichnet, dass**
f) die Filterelemente **(7)** mit der jeweiligen Filterkappe **(14)** oder den jeweiligen Filterkappen jeweils als Einheit zusammengefasst jeweils durch einen einstückigen gasdurchlässigen Hohlkörper gebildet werden.

2. Filtersystem nach Anspruch 1 oder 2, wobei die Filterelemente **(7)** und/oder Filterkappen **(14)** aus Keramik gefertigt sind.

3. Filtersystem nach einem der Ansprüche 1 bis 3, wobei die Filterelemente parallel zueinander ausgerichtet sind.

4. Filtersystem nach einem der vorgenannten Ansprüche, wobei der Hohlkörper nach allen Seiten hin gasdurchlässig ist.

5. Filtersystem nach einem der vorgenannten Ansprüche, wobei die Gegendruck-Abreinigungsvorrichtungen mindestens ein Druckreservoir mit je einem Zuschaltventil aufweisen.

6. Filtersystem nach einem der vorgenannten Ansprüche, wobei die Filterelemente einen runden, eckigen, tropfenförmigen oder ovalen Querschnitt aufweisen.

7. Filtersystem nach einem der vorgenannten Ansprüche, wobei die Filterelemente eine der Schwerkraft entgegen gerichtete Erstreckung mit mindestens einer Krümmung oder Knickung nach oben aufweist.

8. Filtersystem nach einem der vorgenannten Ansprüche, wobei der reingasseitige Ablauf in mehrere getrennte Ablaufstränge unterteilt ist, wobei pro Ablaufstrang mindestens ein Filterelement angeschlossen ist.

9. Filtersystem nach Anspruch 8, wobei die Abgasstränge übereinander angeordnet sind.

10. Filtersystem nach Anspruch 8 oder 9, wobei jeder Ablaufstrang eine eigene separat ansteuerbare Gegendruck-Abreinigungsvorrichtung mit je einem Absperrventil für den Ablauf sowie je einer eigenen Druckluftzuführung im Ablauf zwischen Filterelement und Absperrventil aufweist.

11. Filtersystem nach einem der vorgenannten Ansprüche, wobei die Druckgaszuführung pulsartig betätigbar ist.

## Claims

1. Filter system with cleaning device (9, 10) comprising
a) at least two horizontally oriented, tubular filter elements (7) supported at both ends and individually sealed, with one or two ends with filter caps (14), wherein these are covered by the filter caps (14), and wherein the filter elements have the same or smaller mesh width or pore size than the filter caps,
b) a supply (3) on the untreated gas side arranged outside the filter elements into a filter system volume (2) with an untreated gas supply oriented downwards or horizontally,
c) an outlet (6) on the clean gas side connected with the interior of the filter elements, wherein for filter operation a serial flow connection exists from the untreated gas side supply (3) via the tubular filter elements (7) into the interior of the filter elements and from there via the filter caps (14) to the outlet (6),
d) at least one back-pressure cleaning device (9, 10) with fluid valve (16) in the outlet (6), wherein for cleaning mode with the fluid valve closed, a serial flow connection exists from the back-pressure cleaning device (9, 10) via the filter caps (14) into the interior of the filter elements and from there via the filter elements (7) to the filter system volume (2), and
e) a pressurised gas supply into the gas chamber between filter element and outlet,
**characterised in that**
f) the filter elements (7) with respective filter cap (14) or filter caps are grouped together as a unit and formed from a one-piece gas-permeable hollow body.

2. Filter system according to claim 1 or 2, wherein the filter elements (7) and/or filter caps (14) are made of ceramic.

3. Filter system according to any of claims 1 to 3, wherein the filter elements are oriented parallel to each other.

4. Filter system according to any of the preceding claims, wherein the hollow body is gas-permeable on all sides.

5. Filter system according to any of the preceding claims, wherein the back-pressure cleaning devices have at least one pressure reservoir, each with a switching valve.

6. Filter system according to any of the preceding claims, wherein the filter elements have a round, square, droplet-shaped or oval cross section.

7. Filter system according to any of the preceding claims, wherein the filter elements have an extent with at least one upward curvature or bend against the force of gravity.

8. Filter system according to any of the preceding claims, wherein the clean gas side outlet is divided into several outlet lines, wherein at least one filter element is connected per outlet line.

9. Filter system according to claim 8, wherein the outlet gas lines are arranged above each other.

10. Filter system according to claim 8 or 9, wherein each outlet line has its own back-pressure cleaning device which can be controlled separately, each with a shut-off valve for the outlet and with its own compressed air supply in the outlet between filter element and shut-off valve.

11. Filter system according to any of the preceding claims, wherein the pressurised gas supply can be operated pulse-like.

## Revendications

1. Système de filtre équipé d'un dispositif de nettoyage (9, 10) comprenant:
a) au moins deux éléments de filtre (7), tubulaires, alignés horizontalement et s'appuyant par les deux extrémités, ces éléments étant rendus étanches séparément et comportant un capuchon de filtre (14) à l'une ou aux deux extrémités,
* ces extrémités étant couvertes par les capuchons de filtre (14), et
* les éléments de filtre ayant une dimension de mailles identique ou plus petite ou des dimensions de pores que les capuchons de filtre,
b) une alimentation (3), côté gaz non filtré, à l'extérieur des éléments de filtre, débouchant dans le volume du système de filtre (2) et ayant une conduite de gaz non filtré, dirigée vers le bas ou horizontalement,
c) une sortie de gaz filtré (6), reliée au volume intérieur des éléments de filtre,
* une liaison fluidique série étant prévue pour le fonctionnement comme filtre entre l'alimentation (3) côté gaz non filtré à travers les éléments de filtre tubulaires (7) jusqu'à l'intérieur des éléments de filtre et de là, vers la sortie (6) à travers le capuchon de filtre (14),
d) au moins un dispositif de nettoyage à contre-pression (9, 10) comportant une soupape de fluide (16) dans la sortie (6),
* et pour le mode de nettoyage, lorsque la soupape de fluide est fermée, il y a une liaison fluidique série entre le dispositif de nettoyage à contre-pression (9, 10) à travers les capuchons de filtre (14) jusqu'à l'intérieur des éléments de filtre et de là, à travers les éléments de filtre (7) dans le volume du système de filtre (2), et
e) une alimentation en gaz sous pression du volume à gaz entre les éléments et la sortie,
système de filtre **caractérisé en ce que**
f) les éléments de filtre (7) sont réunis avec le ou les capuchons de filtre (14) respectifs pour former une unité constituée par un corps creux en une seule pièce, perméable au gaz.

2. Système de filtre selon la revendication 1,
dans lequel
les éléments de filtre (7) et/ou les capuchons de filtre (14) sont en céramique.

3. Système de filtre selon l'une des revendications 1 à 2,
dans lequel
les éléments de filtre sont alignés parallèlement.

4. Système de filtre selon l'une quelconque des revendications précédentes,
dans lequel
les corps creux sont perméables au gaz sur tous les côtés.

5. Système de filtre selon l'une quelconque des revendications précédentes,
dans lequel
les dispositifs de nettoyage à contre-pression comportent au moins un réservoir de pression avec chaque fois une vanne de branchement.

6. Système de filtre selon l'une quelconque des revendications précédentes,
dans lequel
les éléments de filtre ont une section ronde, polygonale, en goutte d'eau ou ovale.

7. Système de filtre selon l'une quelconque des revendications précédentes,
dans lequel
les éléments de filtre ont une extension dirigée contre la force de gravité avec au moins une courbure ou un pli tourné(s) vers le haut.

8. Système de filtre selon l'une quelconque des revendications précédentes,
dans lequel
la sortie côté gaz filtré est subdivisée en plusieurs veines distinctes de sortie, avec au moins un élément de filtre par veine de sortie.

9. Système de filtre selon la revendication 8,
dans lequel
les lignes de sortie de gaz sont superposées.

10. Système de filtre selon la revendication 8 ou 9,
selon lequel
chaque ligne de sortie est équipée de son propre dispositif de nettoyage à contre-pression, à commande séparée, ayant chacun une vanne d'arrêt pour la sortie ainsi que son alimentation propre en air comprimé à la jonction entre l'élément de filtre et la vanne d'arrêt.

11. Système de filtre selon l'une des revendications précédentes,
dans lequel
le passage de gaz sous pression est actionné de manière impulsionnelle.
